# NEUE EUROPÄISCHE PATENTSCHRIFT

(11) **EP 1 316 465 B2**
(45) Veröffentlichungstag und Bekanntmachung des Hinweises auf die Entscheidung über den Einspruch: **04.06.2014**
(45) Hinweis auf die Patenterteilung: 09.01.2008
(21) Anmeldenummer: 02023167.6
(22) Anmeldetag: 16.10.2002
(51) Int. Cl.: B60N 2/08

(54) **Arretiervorrichtung mit gerillten Sperrstiften**
Locking device with grooved stop pins
Dispositif d'arrêt avec goupilles de blocage rainurées

(30) Priorität: 28.11.2001 DE 10157774; 15.01.2002 DE 10201153; 14.09.2002 DE 10242825
(43) Veröffentlichungstag der Anmeldung: 04.06.2003
(73) Patentinhaber: C.Rob. Hammerstein GmbH & Co.KG, 42699 Solingen (DE)
(72) Erfinder: Karthaus, Ulrich, 42699 Remscheid (DE); Kautzner, Klaus, 40724 Hilden (DE); Becker, Burkhard, 42657 Solingen (DE); Frohnhaus, Ernst-Reiner, 42653 Solingen (DE)
(74) Vertreter: Bauer, Wulf

(56) Entgegenhaltungen:
- EP-A- 0 408 932
- WO-A1-94/12365
- WO-A2-02/40310
- DE-A- 2 729 770
- DE-A- 4 444 075
- DE-A- 19 709 149
- DE-A- 19 735 030
- DE-A1- 3 042 379
- DE-A1- 4 423 971
- DE-U- 29 700 866
- DE-U- 29 910 720
- GB-A- 2 355 399
- US-A- 4 832 409
- US-A- 5 046 698
- US-A- 5 125 611
- US-A- 5 353 930
- US-A- 5 816 110
- US-A- 5 918 846
- US-A- 6 113 051
- US-B1- 6 352 312

## Beschreibung

Die Erfindung bezieht sich auf eine Arretiereinrichtung einer Längsverstellvorrichtung eines Kraftfahrzeugsitzes nach dem Oberbegriff des Patentanspruches 1. Eine derartige Arretiereinrichtung ist aus DE 299 10 720 U1 vorbekannt. Jeder Sperrstift hat eine einzelne Rille, die sich nach der Beschreibung in einem Crash-Fall an einer Raste der Rastenschiene verhakt, siehe Seite 15, Zeilen 21 bis 29. Es wird die Anweisung gegeben, die Federkräfte so zu wählen, dass die zugehörige Feder einen Sperrstift soweit in eine Rastöffnung hineindrücken kann, bis sich die Rille unterhalb der Rastschiene befindet. Zudem ist aus DE 297 00 866 U1 eine Arretiervorrichtung bekannt, bei der die Sperrstifte eine einzelne Rille aufweisen. Wenn ein Sperrstift in eine der Rastöffnungen eingreift, befindet sich die zugehörige Rille vollständig innerhalb der Stiftbohrung. Auch DE 42 42 895 C1 beschreibt einen Sperrstift mit einer Rille.

Zum Stand der Technik wird weiterhin auf DE 197 09 149 A1, EP 408 932 A2 sowie DE 27 29 770 C2 verwiesen. Derartig Arretiereinrichtungen, einschließlich der o.f. DE 297 00 866 U1, werden auch als Mehrstiftarretiereinrichtungen bezeichnet. Sie ermöglichen eine feinstufige Längsverstellung. In blockierter Stellung ist ein Sperrstift in Anlage an einem Raststeg. Zumeist ist eine Schrägflanke eines Sperrstiftes in Anlage an einem Raststeg. Die Schrägflanken werden beispielsweise durch kegelstumpfförmige Bereiche am freien Ende der Sperrstifte gebildet. Ein Sperrstift sperrt in einer Verschieberichtung. Ein anderer Sperrstift sperrt in der anderen Verschieberichtung.

Da im allgemeinen nur ein Sperrstift für die Arretierung einer Verschieberichtung verantwortlich, ist, wirken auf diesen einen Sperrstift und auf den entsprechenden Raststeg, an dem der Sperrstift anliegt, bei einer unfallbedingten Belastung die gesamten Arretierungskräfte. Diese bewirken bei hoher Belastung ein durchaus gewolltes Verbiegen des Sperrstiftes, wie aus der oben genannten DE 197 09 149 A1 bekannt ist. Nach einem Verbiegen eines Sperrstiftes ändert sich nun aber der Winkel zwischen seiner Sperrflanke und dem Raststeg. Der Winkel wird größer. War er zuvor im Bereich der Selbsthemmung, ist er nun nach dem Verbiegen außerhalb dieses Bereichs. Es wird eine Kraft auf den Sperrstift ausgeübt, die ihn nach oben, also aus der Arretierung heraus, drückt. Es muss aber vermieden werden, dass der Sperrstift vom zugehörigen Raststeg frei kommt, weil sonst die Arretierung freigegeben wäre.

Hier setzt nun die Erfindung ein. Sie hat es sich zur Aufgabe gemacht, die Arretiereinrichtung der eingangs genannten Art dahin gehend weiter zu bilden, dass einem unfallbedingten Hochdrücken eines Sperrstifte aus einer Arretierstellung heraus auch dann entgegen gewirkt wird, wenn der Sperrstift nicht vollständig eingegriffen hatte.

Ausgehend von der Arretiereinrichtung der eingangs genannten Art wird diese Aufgabe gelöst durch die Merkmale des kennzeichnenden Teils des Patentanspruchs 1.

Mindestens einer der Sperrstifte, vorzugsweise alle Sperrstifte haben eine Riffelung, die auch als Crashrille oder Rillenbereich bezeichnet wird. Im Bereich dieser Riffelung befinden sich mehrere Einzelrillen, Vorzugsweise sind drei bis fünf Einzelrillen vorgesehen. Im Bereich der Riffelung ist der Raststift verjüngt, vorzugsweise geringfügig verjüngt, zum Beispiel zwischen 5 und 15 %, vorzugsweise etwa 8 % verjüngt. Die Riffelung hat zudem zum freien Ende des Sperrstiftes hin vorzugsweise einen scharfkantigen Übergang, bildet insbesondere dort eine Kante bzw. eine Anschlagschlagsfläche aus.

Aufgrund der Riffelung mit mehreren Einzelrillen wird einem impulsartigen oder auch langsam ablaufenden Hochdrücken des Sperrstiftes aus seiner Sperrstellung heraus wirksam entgegen gewirkt. Die mehreren Einzelrillen bieten Verhakungs- und Verkrallungsmöglichkeiten, sobald der Sperrstift unfallbedingt etwas ausgebogen ist. Es stehen mehrere Einzelrillen zur Verfügung, die mit dem Material des Führungsteils am unteren Ende der Stiftbohrung wechselwirken können, wodurch eine Aufwärtsbewegung eines Sperrstiftes blockiert wird.

Die Riffelung bedeutet auch eine geringfügige lokale Schwächung der Sperrstifte, so dass sich diese bevorzugt im Bereich der Riffelung verbiegen. Dort aber bieten die Sperrstifte auch zugleich die größte Angriffsmöglichkeit für einen Anschlag an den Bereich um das untere Ende der Stiftbohrung.

Die Reduzierung des Durchmessers der Sperrstifte im Bereich der Riffelung wird einerseits so groß gewählt, dass eine ausreichend große Anschlagfläche vorliegt und damit eine gute mechanische Verhakung möglich ist, andererseits aber nicht so groß gewählt, dass der Sperrstift merklich geschwächt wird und unfallbedingt im Bereich der Riffelung brechen kann. Erwünscht ist eine gezielte Verformung im Bereich der Riffelung.

In bevorzugter Weiterbildung der Erfindung hat das Führungsteil einen nach unten, also zur Rastenleiste hin weisenden Vorsprung für jede Stiftbohrung. Die Vorsprünge verlängern die jeweilige Stiftbohrung. Sie sind vorzugsweise ringförmig. Sie bewirken eine weichere, nachgiebigere Führung der Sperrstifte als im Bereich der Stiftbohrung des Führungsteils. Sie setzen sich einem seitlichen Ausbiegen weniger entgegen als das Führungsteil. Die Vorsprünge können sich bei einer unfallbedingten Belastung verbiegen. Dadurch wird ein Verhaken mit der Riffelung verbessert.

In einer verbesserten Ausführung der Erfindung wird vorgeschlagen, die Vorsprünge als Durchzüge zu fertigen. Hierfür wird in das Führungsteil zunächst eine Vorbohrung für jede Stiftbohrung eingebracht, diese Vorbohrung hat einen deutlich kleineren Durchmesser als die fertige Stiftbohrung, beispielsweise 60% des Durchmessers der fertigen Stiftbohrung. Durch einen Stempel, dessen Außenabmessungen der Stiftbohrung entsprechen, wird nun die Vorbohrung vergrößert und dabei jeweils ein Vorsprung gebildet. Die Vorsprünge sind einstückig mit dem Führungsteil verbunden. In einer anderen Ausführung ist es möglich, die Vorsprünge durch separat eingesetztes Material, beispielsweise Gleithülsen, zu realisieren.

Als besonders vorteilhaft hat es sich erwiesen, in der Rastenleiste eine Sicke vorzusehen, die nach oben, zum Führungsteil hin gewölbt ist. Dadurch wird die Rastenleiste mechanisch ausgesteift und die Festigkeit einer Arretierung erhöht. Die Sicke kann beliebigen Querschnitt haben, beispielsweise halbkreisförmig, dreieckig, oder trapezförmig usw..

In einer bevorzugten Ausbildung sind drei oder vier etwa gleichabständige Einzelrillen nebeneinander vorgesehen. Vorzugsweise haben die Einzelrillen einen kegelstumpfförmig verlaufenden Rillenboden, der sich zum freien Ende des Sperrstiftes hin verjüngt. Vorteilhafterweise haben die Sperrstifte an ihren freien Enden ein kurzes zylindrisches Frontende.

Schließlich hat es sich als vorteilhaft herausgestellt, zwar die Sperrstifte rund auszuführen, die Stiftbohrungen aber unrund auszubilden. Letzteres insbesondere im Bereich der Vorsprünge. Bei einer definierten Last können sich das Material um die Stiftbohrung herum und insbesondere die Vorsprünge plastisch verformen. Hierdurch wird ein besseres Eingraben der Kanten der Einzelrillen in den Vorsprung erreicht.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
Figur 1: Ein perspektivisches Montagebild einer Längsführung mit Sitzschiene und Bodenschiene, der eine Arretiereinheit mit vier Sperrstiften und einem Führungsteil zugeordnet ist,
Figur 2: eine Rückansicht entsprechend des Pfeils II in Figur 1 auf die in Figur 1 gezeigte Anordnung, nunmehr im montierten und zugleich auch im Eingriff befindlichen Zustand,
Figur 3: ein Schnittbild entlang der Linie III-III in Figur 2,
Figur 4: ein Detailbild in Ansicht wie Figur 2 eines im Eingriff befindlichen, unfallbedingt verbogenen Sperrstiftes, zur Erläuterung des Verkrallungseffektes,
Figur 5: eine Seitenansicht entsprechend Figur 2 eines weiteren Ausführungsbeispiels einer Arretiereinheit,
Figur 6: eine Ausführung ähnlich Figur 5 mit drei Einzelrillen, die gemeinsam die Crashrille bilden, an den Sperrstiften,
Figur 7: eine Untersicht eines Führungsteils mit unrunder Stiftbohrung und nicht runden Konturen im Bereich der Vorsprünge, das Führungsteil ist Teil eines L-förmigen Winkelprofils, und
Figur 8: eine perspektivische Darstellung eines Sperrstiftes mit quadratischem Querschnitt und einer Rastenleiste.

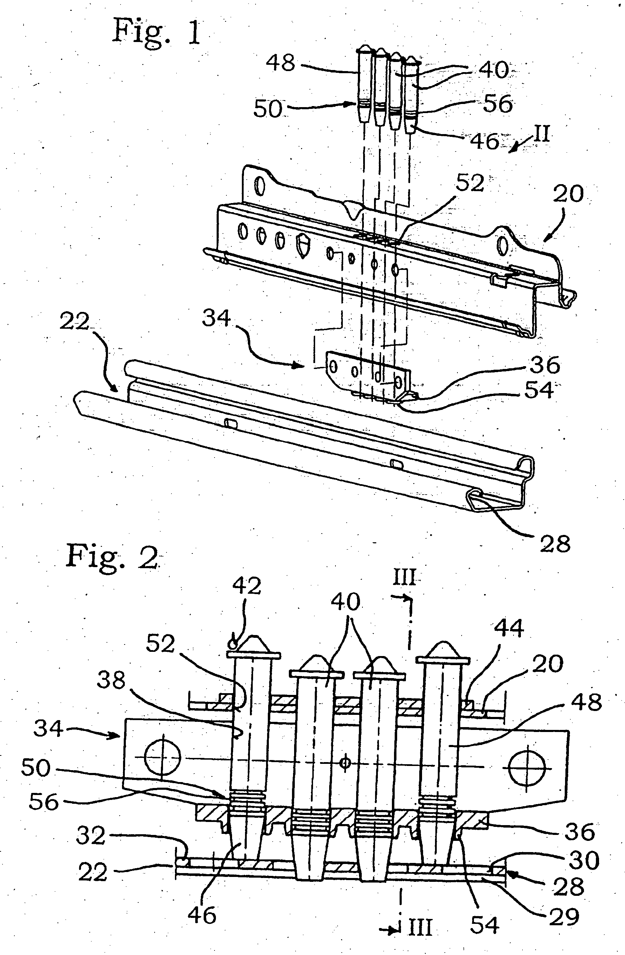

Im folgenden wird das erste Ausführungsbeispiel nach den Figuren 1 bis 4 beschrieben das nicht dem Wortlaut des Anspruchs 1 entspricht. Danach werden die weiteren Ausführungsbeispiele beschrieben, jedoch nur insoweit, als sie sich vom ersten Ausführungsbeispiel unterscheiden.

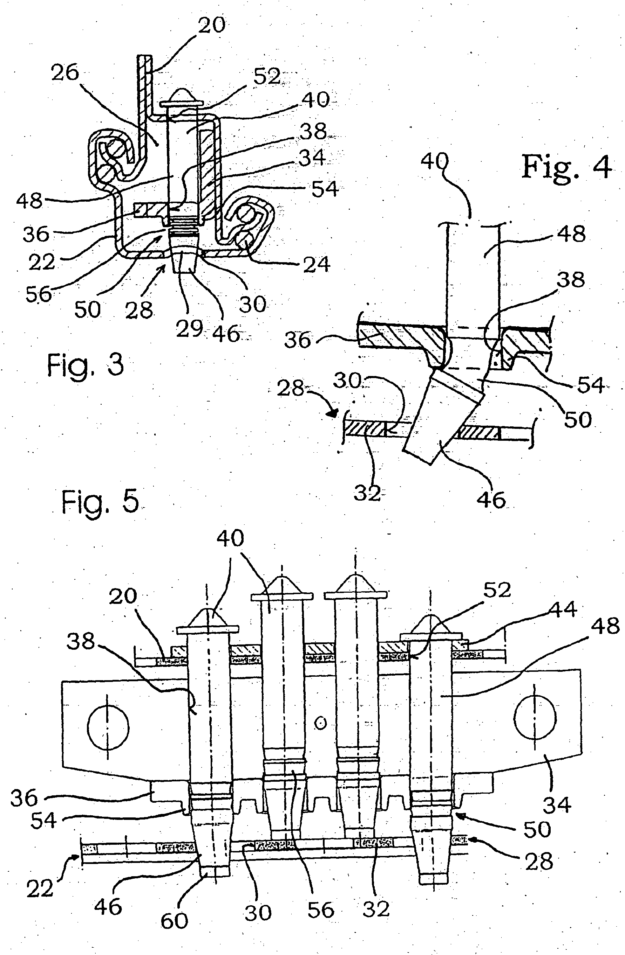

Die Figuren 1 bis 3 zeigen jeweils ein Schienenpaar bestehend aus einer Sitzschiene 20 und einer zugehörigen Bodenschiene 22. Die Schienen sind über geeignete Gleit- oder Wälzmittel, die hier als Kugeln 24 ausgeführt sind (siehe Figur 3), relativ gegeneinander verschiebbar. Die Sitzschiene 20 ist aus zwei Einzelprofilen zusammengefügt, wie insbesondere Figur 3 erkennen lässt. Die beiden Schienen 20, 22 begrenzen einen länglichen Hohlraum 26. Die Bodenschiene 22 ist an einem unteren Schenkel als Rastenleiste 28 ausgebildet, die sich in Schienenlängsrichtung erstreckt. Diese Rastenleiste 28 hat periodisch angeordnete Rastöffnungen 30, auch Fenster genannt, und Raststege 32. Wie insbesondere die Figuren 2 und 3 zeigen, befindet sich die Rastenleiste 28 in einer nach oben gebogenen Sicke 29. Das Material des unteren Flansches der Bodenschiene ist um etwa 1,5 bis 2 mm im Scheitelpunkt der Sicke 29 nach oben gebogen. Die Sicke 29 hat eine Breite, die etwa der Breite der Rastenleiste 28 entspricht. Der Versatz, den die Sicke 29 ausbildet, ist insbesondere in Figur 2 erkennbar. Durch die Sicke 29 wird die Rastenleiste 28 ausgesteift.

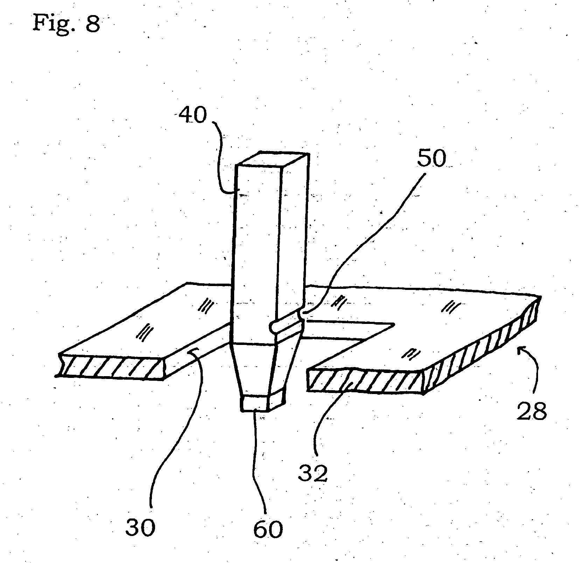

Im Hohlraum 26 befindet sich ein L-förmiges Winkelprofil 34, das mit einem vertikalen L-Schenkel an der Innenfläche eines vertikalen Flansches der Sitzschiene 20 befestigt ist. Ein freier Schenkel dieses Winkelprofils 34 bildet ein Führungsteil 36. In ihm sind vier Stiftbohrungen 38 vorgesehen. Jede Stiftbohrung 38 nimmt einen Sperrstift 40 auf, der im gezeigten Ausführungsbeispiel drehsymmetrisch ist. Die Sperrstifte 40 sind untereinander baugleich. Unrunde Stifte sind möglich, z. B. im Querschnitt quadratische Sperrstifte. Bei unrunden Stiften ist es nicht notwendig eine umlaufende Rille auszubilden. Es genügt eine Kerbe an der Seitenfläche, die in Längsrichtung der Sitzschiene 20 gesehen vorne liegt, siehe Fig. 8.

Die Sperrstifte werden durch eine Feder 42 individuell in eine Sperrposition vorbelastet, durch ein Löseteil 44 können sie gemeinsam in die Freigabestellung gezogen werden. Hierauf muss nicht im Einzelnen eingegangen werden, es wird auf die bereits erwähnte EP 408 932 B verwiesen.

Wie die Figuren zeigen, sind die Sperrstifte 40 etwas länger als die Höhe des Hohlraumes 46. Sie bleiben mit ihrem oberen Betätigungsbereich stets außerhalb der Sitzschiene 20 und greifen im arretierten Zustand in eine Rastöffnung 30 mit ihrem freien Ende ein.

In dem ersten Ausführungsbeispiel ist das untere, freie Ende der Sperrstifte 40 durch einen kegelstumpfförmigen Bereich 46 gebildet. Er geht an seinem oberen Ende über in einen zylindrischen Bereich 48. Dieser wird jedoch knapp oberhalb seines Beginns durch einen Rillenbereich 50, auch Crashrille, Riffelung genannt, unterbrochen. Dort ist der zylindrische Bereich 48 durch mehrere, beabstandet angeordnete Einzelrillen 56 verjüngt. Insbesondere hat jede Einzelrille 56 an ihrem unteren Ende, das der Rastenleiste 28 näher ist als ihr anderes Ende, einen scharfkantigen Übergang zum ungestörten, zylindrischen Bereich 48. Dies wird auch aus den weiteren Ausführungsbeispielen deutlich.

Die Sperrstifte 40 sind zudem in einem oberen Schenkel der Sitzschiene 20 in Löchern 52 geführt. Diese haben einen Abstand vom Führungsteil 36, der deutlich größer ist als die halbe Länge der Sperrstifte. Insgesamt ergibt sich eine wirksame Abstützung der Sperrstifte 40 über eine große Strecke, also einen großen Hebelarm.
Unterhalb jeder Stiftbohrung befindet sich ein Vorsprung 54, der die Stiftbohrung nach unten fortsetzt. Er ist bevorzugt als Durchzug ausgebildet, worauf später noch eingegangen wird, kann aber grundsätzlich in beliebiger Art realisiert werden. Er ist einstückig mit dem restlichen Führungsteil 36 verbunden und aus dessen Material herausgeformt. Er hat in Axialrichtung eine Länge, die etwa 60 % der Materialstärke des Führungsteils 36 ausmacht. In Radialrichtung sind die ringförmig ausgeführten Vorsprünge 54 relativ dünn, ihre Materialstärke liegt bei 1 bis 3 mm. Vorzugsweise haben die Vorsprünge 54 an ihrem unteren, freien Ende eine scharfe Kante. Vorzugsweise sind die Vorsprünge 54 gehärtet, z.B. einsatzgehärtet.

Wenn die Vorsprünge 54 in bevorzugter Ausführung als Durchzüge hergestellt werden, wird wie folgt vorgegangen: Zunächst werden am Ort der späteren Stiftbohrungen 38 Vorbohrungen durchgeführt, die z. B. etwa 60 % des Durchmessers der späteren Stiftbohrungen 38 haben. Dann wird durch diese Vorbohrung ein Werkzeug, insbesondere ein Stift, getrieben, der die Vorbohrung auf die Größe der Stiftbohrung 38 erweitert und am Austritt den Vorsprung 54 einschließlich des durch ihn verlängerten Teils der Stiftbohrung 38 bildet.

Für die erfindungsgemäße Verkrallung wird im wesentlichen derjenige Teil des Vorsprungs benötigt, der sich betrachtet vom Mittelpunkt einer Stiftbohrung 38 in Längsrichtung der Schienen 20, 22 befindet. In Querrichtung hierzu kann der Vorsprung flacher sein oder ganz entfallen.

Wie insbesondere die Figuren 2 bis 4 zeigen, befindet sich der Rillenbereich 50 für diejenigen Sperrstifte, die im Eingriff befindlich sind, in Nähe des und vorzugsweise etwas unterhalb des unteren Endes der Stiftbohrung 38. Er befindet sich in Nähe des zugehörigen Vorsprunges 54 und im Bereich dieses Vorsprunges. Dadurch wird erreicht, dass bei unfallbedingtem Hochdrücken des Sperrstiftes 40 und zusätzlicher Verbiegung (siehe Figur 4) eine untere Kante einer Einzelrille 56 in Anschlag an die in Verbiegungsrichtung benachbarte Kante des Vorsprungs 54 kommt. Dadurch ist das gewünschte Verhaken im Unfallzustand möglich. Die untere Begrenzung jeder Einzelrille 56 ist vorzugsweise kantig bzw. verläuft etwa rechtwinklig zur Stiftachse. Dadurch wird eine möglichst große Anschlagfläche geschaffen, die ein Hochschnellen des Sperrstiftes 40 behindert.

Die Vorsprünge 54 befinden sich an der Unterfläche des Führungsteils 36 und in Nähe des Raststegs 32. Der Abstand zwischen Führungssteg 36 und Raststeg 32 ist etwas kleiner als die axiale Länge des kegelstumpfförmigen Bereiches 46.

Das Führungsteil 36 ist aus einem Stahl mit einer Streckgrenze von etwa 260 N/mm² gefertigt. Die Sperrstifte 40 sind ebenfalls aus Stahl, aber mit deutlich höherer Streckgrenze, beispielsweise 600 N/mm², hergestellt. Die Materialstärke des Führungsteils 36 liegt bei etwa 3,5 mm. Die Vorsprünge ragen etwa 2 mm nach unten vor und haben eine Wanddicke von etwa 1,5 mm. Durch die Vorsprünge 54 wird die Stiftführung weicher und länger. Die Sperrstifte 40 haben einen Durchmesser in ihrem zylindrischen Bereich 48 von etwa 7,5 mm. Die Stiftbohrung 38 ist ein Loch mit etwa 7,8 mm Innendurchmesser. Die Schienen 20, 22 sind aus einem sehr harten Stahl gefertigt, der eine noch höhere Streckgrenze als das Material der Sperrstifte 40 hat. Im Bereich der Crashrille 50 verjüngt sich der Durchmesser der Sperrstifte auf etwa 6,9 mm. Die axiale Länge des Rillenbereichs 50 ist etwas kleiner als die axiale Länge der kompletten Stiftbohrung 38, also in Führungsteil 36 und Vorsprung 54. Sie kann auch größer als die axiale Länge der Stiftbohrung 38 sein.

In der Ausführung nach Figur 5 ist, die nicht dem Wortlaut des Anspruchs 1 entspricht, ist jede der zwei Einzelrillen 56 so augeführt, dass sich ihr Boden von oben zum freien Ende des Sperrstiftes hin kegelstumpfförmig verjüngt. Dadurch kommt es zu einer scharfen Kante am unteren Endbereich. In Figur 5 ist der ganz rechts befindliche Sperrstift 40 voll eingerastet, er kann nicht tiefer greifen. Man erkennt, dass sich die Unterkante des Vorsprungs 54 einerseits auf gleicher Höhe wie der Rillenbereich 50, aber einige mm oberhalb des unteren, scharfkantigen Randes der unteren Einzelrille 56 befindet. Die beiden mittleren Sperrstifte 40 sind außer Eingriff, der Rillenbereich 50 befindet sich fast vollständig oberhalb des Führungsteils 36. Der ganz links befindliche Sperrstift 40 ist im Eingriff, aber nicht vollständig nach unten ausgefahren, sodass noch eventuelles Spiel ausgeglichen werden kann. Bei ihm befindet sich der untere Rand des Rillenbereiches 50 etwa in gleicher Höhe, sogar geringfügig oberhalb der Unterkante des Vorsprungs 54. Auch in diesem Zustand ist wegen der Punktberührung zwischen dem unteren Rand des Rillenbereiches 50 und dem Vorsprung 54 im Falle einer unfallbedingten Verbiegung eine ausreichende Verhakung erreichbar.

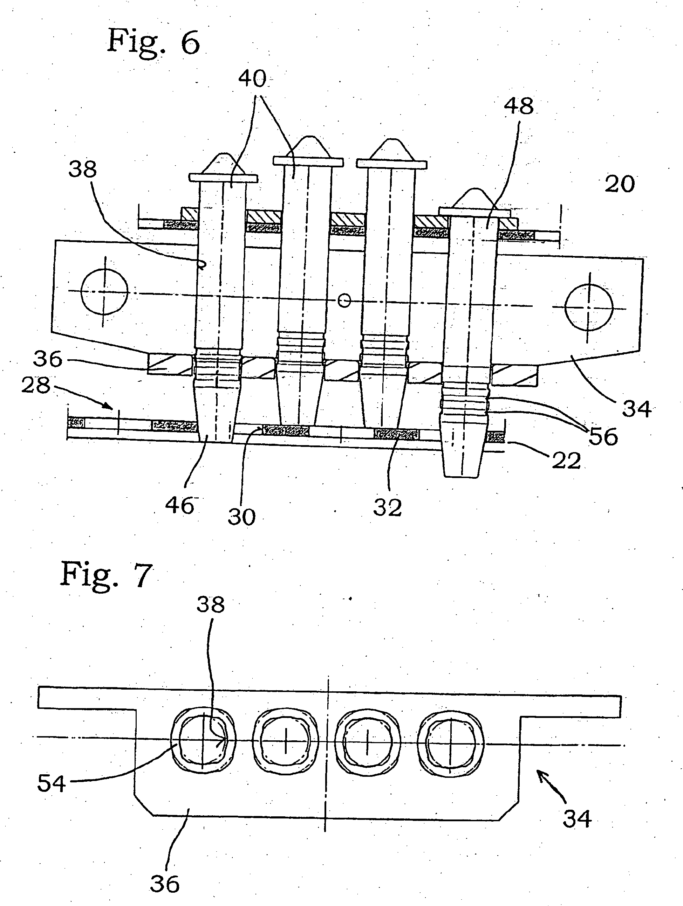

Figur 6 zeigt eine Ausbildung nach dem Wortlaut des Anspruchs 1 und ähnlich Figur 5, jedoch ist nunmehr der Rillenbereich 50 durch eine Anordnung von drei Einzelrillen 56 ausgebildet, es entfällt der Vorsprung und Einzelrillen stehen zur Verfügung mit dem Material des Führungsteils am unteren Ende der Stiftbohrung (38) in Wechselwirkung zu treten wenn der Sperrstift (40) in eine der Rastöffnungen (30) eingerastet ist. Zwischen den Einzelrillen 56 hat der Sperrstift 40 wieder den Durchmesser des zylindrischen Bereiches 48. Dadurch wird die Führung des Sperrstiftes 40 in der Stiftbohrung 38 verbessert. Die axiale Länge dieses Zwischenbereiches entspricht etwa der axialen Länge der Einzelrillen 56. Durch die mehreren Einzelrillen 56 steht eine größere Auswahl an unteren Rillenkanten, die mit dem unteren Rand des Führungsteils 36 wechselwirken können, zur Verfügung. Die drei Einzelrillen 56 erstrecken sich über 50-90 %, insbesondere 70 % des Maximalhubes, den die Sperrstifte 40 ausführen können. Die Länge des Maximalhubes entspricht auch im Wesentlichen der axialen Länge des kegelstumpfförmigen Bereiches 46.

Die Einzelrillen 56 haben eine axiale Abmessung von z. B. 2 bis 4 mm. Zwischen zwei Einzelrillen bleibt ein ungestörter Bereich mit vollem Querschnitt von ca. 0,1 bis 3 mm axialer Abmessung.

In Figur 6 ist ein Ausführungsbeispiel für ein Winkelprofil 34 gezeigt, dort sind die Stiftbohrungen 38 unrund. Die Sperrstifte 40 dagegen sind rund. Konkret sind die Querschnitte der Stiftbohrung 38 in Figur 7 etwa kissenförmig, sie kommen in die Nähe eines Quadrates mit abgerundeten Ecken. Dadurch bleibt einerseits ausreichende Führungsfläche bestehen. Andererseits erhält man die Möglichkeit, dass eine plastische Deformation im Bereich um die Stiftbohrung 38 herum stattfinden kann. Diese plastische Deformation tritt bei einer definierten Last, wie sie unfallbedingt auftritt, ein. Es wird eine bessere Eingrabung der Rillenkanten ermöglicht.

Fig. 8, die nicht dem Wortlaut des Anspruchs 1 entspricht, schließlich zeigt einen unrunden Sperrstift 40, im Ausführungsbeispiel ist er im Querschnitt quadratisch. Aufgrund der unrunden Querschnittsform hat der Sperrstift 40 eine vorgegebene Orientierung. Er verjüngt sich am unteren freien Ende zu einem Frontende 60. Nur auf einer seiner vier Seitenflächen hat er eine Rille 50, die anderen Seitenflächen sind frei von Rillen. Die Rille ist für einen in Fahrtrichtung sitzenden Passagier in Fahrtrichtung vorn. Sie ist in Längsrichtung der Schienen orientiert und weist in Schienenlängsrichtung nach vorn. Für Heckaufprall kann auch eine Rille auf der gegenüberliegenden Seitenfläche vorgesehen sein.

## Patentansprüche

1. Arretiereinrichtung einer Längsverstellvorrichtung eines Kraftfahrzeugsitzes, mit a) einer Rastenleiste (28), die periodisch angeordnete Rastöffnungen (30) und Raststege (32) aufweist und cincr Bodenschiene (22) der Längsverstellvorrichtung zugeordnet ist sowie b) einer Sperreinheit, die einer Sitzschiene (20) der Längsverstellvorrichtung zugeordnet ist und die mindestens zwei, unabhängig von einander in Rastöffnungen (30) einrastbare und gemeinsam ausrastbare Sperrstifte (40) aufweist, welche in einem Führungsteil (36) angeordnet sind, das für jeden Sperrstift (40) eine Stiftbohrung (38) aufweist, **dadurch gekennzeichnet, dass** mindestens einer der Sperrstifte (40) eine Riffelung (50) mit mehreren Einzelrillen (56) aufweist, dass sich diese Riffelung (50) in Nähe eines unteren Endes der zugehörigen Stiftbohrung (38) befindet, wenn der Sperrstift (40) in eine der Rastöffnungen (30) eingerastet ist, dass die Einzelrillen (56) beabstandet sind und zur Verfügung stehen, mit dem Material des Führungsteils am unteren Ende der Stiftbohrung (38) in Wechselwirkung zu treten.

2. Arretiereinrichtung nach Anspruch 1, **dadurch gekennzeichnet, dass** zwischen zwei Einzelrillen der Riffelung (50) ein ungestörter Bereich mit vollem Querschnitt von ca. 0,1 bis 3 mm axialer Abmessung bleibt.

3. Arretiereinrichtung nach Anspruch 1, **dadurch gekennzeichnet, dass** die Riffelung (50) mindestens eine Kante an dem dem freien Ende des Sperrstiftes (40) näheren Rillenrand aufweist.

4. Arretiereinrichtung nach Anspruch 1, **dadurch gekennzeichnet dass** die Sperrstifte (40) ein freies Ende und ein Betätigungsende aufweisen, dass das Führungsteil (36) näher dem freien Ende als dem Betätigungsende angeordnet ist, und dass ein Führungsblech vorgesehen ist, das Führungsöffnungen für die Sperrstifte (40) aufweist und sich in Nähe des Betätigungsendes der Sperrstifte (40) befindet.

5. Arretiereinrichtung nach Anspruch 1, **dadurch gekennzeichnet, dass** der Sperrstift (40) in Nähe seines freien Endes einen kegelstumpfförmigen Bereich (46) aufweist, dass sich an diesen kegelstumpfförmigen Bereich (16) ein längerer, zylindrischer Bereich (48) anschliesst und dass sich die Riffelung (50) innerhalb dieses zylindrischen Bereichs (48), aber in unmittelbarer Nähe des kegelstumpfförmigen Bereichs (46) befindet.

6. Arretiereinrichtung nach Anspruch 1, **dadurch gekennzeichnet, dass** in der Rastenleiste (28) eine Sicke ausgebildet ist, in der das Material der Rastenleiste (28) nach oben zum Führungsteil (36) hin ausgeformt ist, insbesondere um etwa 1,5 bis 2 mm nach oben versetzt ist.

7. Arretiereinrichtung nach Anspruch 1, **dadurch gekennzeichnet, dass** das Führungsteil (36) eine der Rastenleiste (28) zugewandte Fläche aufweist, dass an dieser Fläche Vorsprünge (54) angeordnet sind und zur Rastenleiste (28) vorspringt, und dass diese Vorsprünge (54) konzentrisch zu den Stiftbohrungen (38) sind und diese verlängern.

8. Arretiereinrichtung nach Anspruch 1, **dadurch gekennzeichnet, dass** eine untere Begrenzung jeder Einzelrille (56) etwa rechtwinklig zur Stiftachse verläuft.

9. Arretiereinrichtung nach Anspruch 1., **dadurch gekennzeichnet, dass** die Einzelrille (56) eine umlaufende Rille oder eine nicht umlaufende Rille ist.

10. Arretiereinrichtung nach Anspruch 1, **dadurch gekennzeichnet, dass** die Einzelrillen (56) gleichabständig nebeneinander vorgesehen sind.

## Claims

1. A locking device of a lengthwise adjustment device of a vehicle seat provided with a) a catch bar (28) with periodically arranged snap openings (30) and snap studs (32) that is assigned to a bottom rail (22) of the lengthwise adjustment device and with b) a locking unit assigned to a seat rail (20) of the lengthwise adjustment device and provided with at least two locking pins (40) that are snappable into snap opening (30) independent of one another and jointly disengageable, said locking pins being arranged in a guide member (36) having a pin bore (38) for each locking pin, **characterized in that** at least one of the locking pins (40) is provided with a grooved region (50) having several individual grooves (56), that said grooved region (50) is located in proximity to a lower end of the corresponding pin bore (38) when the locking pin (40) is engaged in one of the snap openings (30), and that the individual grooves (56) are spaced from each other and are available to interact with the material of the guide member at the lower end of the pin bore.

2. The locking device according to claim 1, **characterized in that** an intact region with a full cross section of approximately 0.1 to 3 mm in axial dimension remains between two individual grooves of the grooved region (50).

3. The locking device according to claim 1, **characterized in that** the grooved region (50) has at least one edge provided on the border of the groove which is closer to the free end of the locking pin (40).

4. The locking device according to claim 1, **characterized in that** the locking pins (40) are provided with a free end and with an actuation end, that the guide member (36) is located nearer to the free end than to the actuation end and that a guide plate is provided that comprises guide apertures for the locking pins (40) and is located in proximity to the actuation end of the locking pins (40).

5. The locking device according to claim 1, **characterized in that** the locking pin (40) is provided with a truncated region (46) in proximity to the free end thereof, that a quite long, cylindrical region (48) is adjacent said truncated region (46) and that the grooved region (50) is located within said cylindrical region (48), but in immediate proximity to the truncated region (46).

6. The locking device according to claim 1, **characterized in that** in the catch bar (28) there is formed a bead in which the material of catch bar (28) is shaped upward toward the guide member (36) and is more specifically offset upward by about 1.5 to 2 mm.

7. The locking device according to claim 1, **characterized in that** the guide member (36) is provided with an area facing the catch bar (28), that projections (54) are arranged on said area, protruding toward said catch bar (28) and that said projections (54) exhibit a course that is concentric with the pin bores (38) and extend as a continuation thereof.

8. The locking device according to claim 1, **characterized in that** a lower boundary of each individual groove (56) is oriented approximately at right angles with the axis of the pin.

9. The locking device according to claim 1, **characterized in that** the individual groove (56) is formed as a groove running around or as a non running around groove.

10. The locking device according to claim 1, **characterized in that** the individual grooves (56) are arranged side by side evenly spaced.

## Revendications

1. Dispositif d'arrêt d'un dispositif de réglage longitudinal d'un siège de véhicule automobile, avec a) une barre à crans (28) qui présente des ouvertures d'arrêt (30) et des entretoises d'arrêt (32) disposées périodiquement et qui est associée à un rail de fond (22) dudit dispositif de réglage longitudinal, ainsi qu'avec b) une unité de blocage qui est associée à un rail de siège (20) du dispositif de réglage longitudinal et qui présente au moins deux goupilles de blocage (40) qui peuvent être enclenchées l'une indépendamment de l'autre dans des ouvertures d'arrêt (30) et dés enclenchées en commun et qui sont disposées dans une pièce de guidage (36) laquelle présente un perçage de goupille (38) pour chacune des goupilles de blocage (40), **caractérisé par le fait que** l'une au moins desdites goupilles de blocage (40) présente une portion cannelée (50) comprenant plusieurs cannelures individuelles (56), que cette portion cannelée (50) est située à proximité d'une extrémité inférieure du perçage de goupille (38) associé lorsque ladite goupille de blocage (40) est enclenchée dans une des ouvertures d'arrêt (30), que lesdites cannelures individuelles (56) sont espacées et sont à disposition pour entrer en interaction avec le matériau de ladite pièce de guidage à l'extrémité inférieure du perçage de goupille (38).

2. Dispositif d'arrêt selon la revendication 1, **caractérisé par le fait qu'**entre deux cannelures individuelles de la portion cannelée (50) subsiste une zone non dérangée à pleine section transversale, d'une dimension axiale comprise entre 0,1 et 3 mm à peu près.

3. Dispositif d'arrêt selon la revendication 1, **caractérisé par le fait que** ladite portion cannelée (50) présente au moins une arête sur le bord de cannelure qui est situé plus près de l'extrémité libre de la goupille de blocage (40).

4. Dispositif d'arrêt selon la revendication 1, **caractérisé par le fait que** lesdites goupilles d'arrêt (40) présentent une extrémité libre et une extrémité de manoeuvre, que ladite pièce de guidage (36) est disposée plus près de l'extrémité libre que de l'extrémité de manoeuvre et qu'une tôle de guidage est prévue qui présente des ouvertures de guidage pour les goupilles de blocage (40) et qui est située à proximité de l'extrémité de manoeuvre des goupilles de blocage (40).

5. Dispositif d'arrêt selon la revendication 1, **caractérisé par le fait que** ladite goupille de blocage (40) présente, à proximité de son extrémité libre, une zone tronconique (46), que cette zone tronconique (46) est suivie d'une zone cylindrique de longueur plus importante et que ladite portion cannelée (50) est située à l'intérieur de cette zone cylindrique (48), mais à proximité immédiate de la zone tronconique (46).

6. Dispositif d'arrêt selon la revendication 1, **caractérisé par le fait que** dans la barre à crans (28) est réalisée une moulure dans laquelle le matériau de la barre à crans (28) est déformé vers le haut en direction de la pièce de guidage (36), en particulier est décalé d'environ 1,5 à 2 mm vers le haut.

7. Dispositif d'arrêt selon la revendication 1, **caractérisé par le fait que** ladite pièce de guidage (36) présente une face montrant vers la barre à crans (28), que des projections (54) sont disposées sur cette face et sont en saillie vers la barre à crans (28), et que ces projections (54) sont concentriques par rapport aux perçages de goupille (38) et rallongent ceux-ci.

8. Dispositif d'arrêt selon la revendication 1, **caractérisé par le fait qu'**une limitation inférieure de chaque cannelure individuelle (56) s'étend à peu près à angle droit par rapport à l'axe de la goupille.

9. Dispositif d'arrêt selon la revendication 1, **caractérisé par le fait que** la cannelure individuelle (56) est une cannelure circonférentielle ou une cannelure non circonférentielle.

10. Dispositif d'arrêt selon la revendication 1, **caractérisé par le fait que** les cannelures individuelles (56) sont prévues à distance égale les unes à côtés des autres.
